# FASCICULE DE BREVET EUROPEEN

(11) **EP 1 537 047 B1**
(45) Date de publication et mention de la délivrance du brevet: **09.03.2016**
(21) Numéro de dépôt: 03769533.5
(22) Date de dépôt: 28.08.2003
(51) Int. Cl.: C01B 13/32, C01G 25/02, C01G 23/047, C01B 13/36

(54) **PROCEDE DE PREPARATION DE POUDRES D OXYDES INORGANIQUES, DE COMPOSES CRISTALLINS ET UTILISATION DE CES COMPOSES**
VERFAHREN ZUR HERSTELLUNG VON ANORGANISCHEN OXIDPULVERN KRISTALLINE ZUSAMMENSETZUNGEN UND IHRE VERWENDUNG
METHOD OF PREPARING INORGANIC OXIDE POWDERS, CRYSTALLINE COMPOUNDS AND USES OF SAID COMPOUNDS

(30) Priorité: 30.08.2002 FR 0210777
(43) Date de publication de la demande: 08.06.2005
(73) Titulaire: DGTEC, 38430 Moirans (FR); CENTRE NATIONAL DE LA RECHERCHE SCIENTIFIQUE -CNRS-, 75016 Paris (FR); UNIVERSITE CLAUDE BERNARD - LYON 1, 69100 Villeurbanne (FR)
(72) Inventeur: POMMIER, Bernard, F-69300 Caluire (FR); LEJAY, Pascal, F-38800 Le Pont-de-Claix (FR); PAJONK, Gérard, F-69650 Quincieux (FR); BARET, Guy, F-38500 Voiron (FR)
(74) Mandataire: Regimbeau
(86) Numéro de dépôt international: PCT/FR2003/002601
(87) Numéro de publication internationale: WO 2004/020332

(56) Documents cités:
- EP-A- 0 225 785
- EP-A- 0 454 239
- WO-A-98/51613
- FR-A- 2 741 060
- US-A- 5 958 363

## Description

La présente invention a pour objet un procédé de fabrication de poudres à base d'oxydes inorganiques dopés à l'yttrium.

Les procédés de l'art antérieur nécessitaient l'introduction d'éléments étrangers. Ces procédés influençaient de façon néfaste la pureté du produit. De plus, ces procédés impliquaient généralement un nombre important d'étapes élémentaires responsables de coûts de fabrication élevés. Les documents EP-A-225 785 et US-A-5958363 décrivent des procédés de préparation de poudre d'oxyde inorganique par hydrolyse d'un alcoxyde métallique.

Or, les inventeurs ont trouvé qu'en faisant appel à la chimie des solutions, on pouvait résoudre les problèmes évoqués précédemment, notamment en utilisant un procédé appelé solution sol-gel couplé à un séchage dans des conditions supercritiques qui permet de préparer à l'aide de réactifs chimiques de très grande pureté facilement disponibles des formulations précises sous la forme de gel mixte.

Aussi, la présente invention a-t-elle pour objet un procédé de préparation d'une composition précurseur de poudre d'oxydes inorganiques choisis parmi TiO₂, ZrO₂, Al₂O₃ et SiO₂ dopés par 1 à 15% d'yttrium, ladite composition étant sous forme d'aérogel, caractérisé en ce qu'il comprend les étapes suivantes:
(a) addition dans un solvant organique, en présence d'eau, de différents éléments chimiques nécessaires à l'obtention dudit précurseur, lesdits éléments chimiques étant sous forme soluble,
(b) mélange sous agitation à une température inférieure à la température d'ébullition du solvant, de préférence à la température ambiante, et
(c) séchage en autoclave à une température supérieure à la température critique du solvant.

Le procédé selon l'invention n'introduit aucun élément étranger et en particulier ne met en oeuvre ni catalyseur acide, ni catalyseur basique. Ainsi, la pureté du produit est donc conservée. On limite également le nombre d'opérations élémentaires, ce qui réduit le coût de la fabrication.

Dans un mode de réalisation particulièrement avantageux de l'invention, la solution initiale doit contenir tous les éléments chimiques nécessaires à l'obtention de la composition précurseur dans un rapport stoechiométrique.

Dans un autre mode de réalisation particulièrement avantageux de l'invention, les formes solubles des éléments chimiques nécessaires à l'obtention dudit précurseur sont choisies dans le groupe constitué par les acétates, les alcoxydes, les oxalates et les acétylacétonates et leurs mélanges. Bien évidemment, ces réactifs ne sont pas limitatifs de l'invention, tout autre sel ou dérivé organométallique pouvant être utilisé (par exemple des formiates, des éthoxydes, des propoxydes, ...).

La solution préparée à l'étape (a) peut être obtenue soit en introduisant directement les formes solubles dans la phase solvant organique, soit en procédant à des mélanges de solutions organiques préalablement préparées.

La phase solvant organique doit être de préférence telle que les formes solubles des divers éléments chimiques requis à l'obtention du précurseur soient solubles dans ledit solvant organique ou bien susceptibles de former des solutions colloïdales homogènes et stables.

Pour augmenter la solubilité et/ou la stabilité de certaines de ces formes solubles, il peut être éventuellement nécessaire d'ajouter des composés chimiques bien connus de l'homme du métier dans ce domaine.

Des solvants organiques particulièrement avantageux pour la mise en oeuvre du procédé selon l'invention sont les alcools, notamment le méthanol, l'éthanol, le n-butanol, l'isopropanol, le sec-butanol, l'acétone et le CO₂.

Dans un mode de réalisation encore plus avantageux de l'invention, l'étape (b) est réalisée soit par agitation ultrasonique, soit par agitation mécanique.

Le procédé de l'invention s'applique aux oxydes inorganiques comme la silice, l'alumine, l'oxyde de zirconium, de titane et d'yttrium.

Avec le procédé selon l'invention, on peut préparer des poudres sous forme d'aérogels de TiO₂, de ZrO₂, d'Al₂O₃ et de SiO₂, lesdites poudres étant dopées par 1 à 15% d'yttrium, avantageusement 8% d'yttrium.

A l'issue de ces trois étapes, on obtient un aérogel dont le volume apparent est égal à celui du mélange liquide initial.

Le séchage dans les conditions supercritiques, c'est-à-dire à une température supérieure à la température critique du solvant ou du mélange de liquides initial, permet d'évacuer la phase liquide qui imprègne le gel. Ce procédé évite ce qui ce passe lors d'un séchage classique par évaporation, à savoir la formation d'un ménisque gaz-liquide à l'intérieur des pores du gel, cette interface étant due à la tension superficielle non nulle d'un liquide au-dessous de sa température critique.

Lorsqu'on réalise le séchage dans des conditions supercritiques, alors la tension superficielle du liquide devient et reste nulle, ce qui annule les forces capillaires et permet de récupérer un gel sec qui a conservé sa porosité et son état de division très poussé.

Au contraire, lorsqu'on utilise un séchage classique, la phase qui se forme conduit à l'effondrement de la porosité du gel.

L'aérogel se présente sous la forme d'une poudre sèche, amorphe, extrêmement divisée, dont la surface spécifique est comprise entre 50 et 500 m²/g, de préférence entre 80 et 250 m²/g et dont l'homogénéité chimique est tout à fait comparable à celle d'un liquide.

Un autre objet de l'invention est une poudre d'oxyde inorganique choisis parmi TiO₂, ZrO₂, Al₂O₃ et SiO₂ dopé par 1 à 15 % d'yttrium sous forme d'un aérogel, caractérisée en ce qu'elle est obtenue directement par le procédé de l'invention. L'aérogel ainsi obtenu peut être utilisé pour la préparation de poudres cristallines se présentant sous la forme d'une poudre très fine, c'est-à-dire présentant une granulométrie moyenne de l'ordre de la dizaine ou la centaine de nanomètres, avantageusement comprise entre 10 et 500 nanomètres, de préférence comprise en 15 et 100 nanomètres. La surface spécifique de ces poudres cristallines est comprise entre 3 et 200 m²/g, de préférence entre 20 et 100 m²/g.

Le procédé selon l'invention permet d'obtenir des composés cristallins à basse température qui présentent en outre une faible granulométrie; notamment des composés cristallins de TiO₂, de ZrO₂, d'Al₂O₃ et de SiO₂ dopés par 1 à 15% d'yttrium.

Selon une caractéristique particulière de l'invention, le procédé de préparation d'un composé cristallin permet d'obtenir une composition soumise à un traitement thermique à une température comprise entre 300 et 1 200°C pendant 10 minutes à 10 heures sous atmosphère contrôlée.

L'état fortement divisé et l'homogénéité chimique sont à l'origine de la très forte réactivité chimique de ces poudres. Ils impliquent les avantages suivants dans l'utilisation de précurseurs sous forme "aérogel":
(1) les traitements thermiques se réalisent à basse température et les cinétiques de réaction sont très fortement accélérées,
(2) les problèmes liés à la volatilisation à haute température de certains réactifs sont supprimés: pas d'ajustement de stoechiométrie en fonction du traitement thermique,
(3) la poudre cristallisée conserve l'état de division du précurseur sans phénomène de frittage, et
(4) aucune homogénéisation n'est nécessaire.

Les poudres obtenues par le procédé selon l'invention peuvent être utilisées dans des piles à combustibles de type SOFC (Solid Oxide Fuel Cell) notamment pour l'oxyde de zirconium dopé à l'yttrium, dans le domaine cosmétique comme opacifiant ou filtre UV pour l'oxyde de titane, comme catalyseur ou support de catalyseur ou comme revêtement notamment de métaux par torches à plasma.

Elles peuvent être également utilisées comme oxyde réfractaire ultra-pulvérulent pour fabriquer des creusets.

Le procédé de l'invention permet d'obtenir des poudres dopées stabilisées à température ambiante.

Les exemples et les figures qui suivent illustrent l'invention sans toutefois la limiter.
La figure 1 illustre la stabilité de la poudre de zircone cubique obtenue selon l'exemple 1 après un traitement thermique sous air à 650°C.
La figure 2 montre l'évolution du paramètre de maille en fonction de la température du traitement thermique.
La figure 3 est une photographie en microscopie électronique à balayage montrant des particules de ZrO₂ dopées avec 8% de Y₂O₃.
La figure 4 illustre la structure anatase du TiO₂ obtenu après traitement thermique de l'aérogel à 600°C selon le mode opératoire de l'exemple 2.
La figure 5 illustre la structure de type rutile obtenu par traitement thermique à 1 000°C tel que décrit selon le mode opératoire de l'exemple 2.
La figure 6 illustre la polystructuralité d'une poudre obtenue par traitement thermique pendant 5 heures à 850°C d'un aérogel obtenu selon l'exemple 2.
La figure 7 est une photographie en microscopie électronique à balayage montrant des particules de TiO₂ de structure rutile.

### EXEMPLE 1: Synthèse de poudre de ZrO₂ dopée avec Y₂O₃ (8%) par voie méthanol supercritique

### 1. Préparation de l'aérogel

Dans une première étape, une solution homogène de précurseurs est préparée. 16,20 g d'yttrium (III) acétate hydrate (Y (CH₃COO)₃, xH₂O) sont dissous sous agitation mécanique dans 150 cm³ de méthanol. 155 cm³ de zirconium (IV) propoxide (Zr(CH₃CH₂CH₂O)₄), 30 cm³ d'H₂O et 20 cm³ de méthanol sont ensuite ajoutés à ce mélange toujours sous agitation mécanique. Une solution blanche laiteuse est obtenue.

Le mélange plongé en autoclave dans 120 cm³ de méthanol supplémentaire est ensuite séché sous les conditions hypercritiques. L'autoclave est porté sous un flux d'azote à 250°C et mis sous pression.

De retour à la pression atmosphérique et à l'ambiante, environ 54,14 g de poudre blanche de très grande surface spécifique S=228 m²·g⁻¹ sont récupérés.

### 2. Obtention d'une poudre de ZrO₂

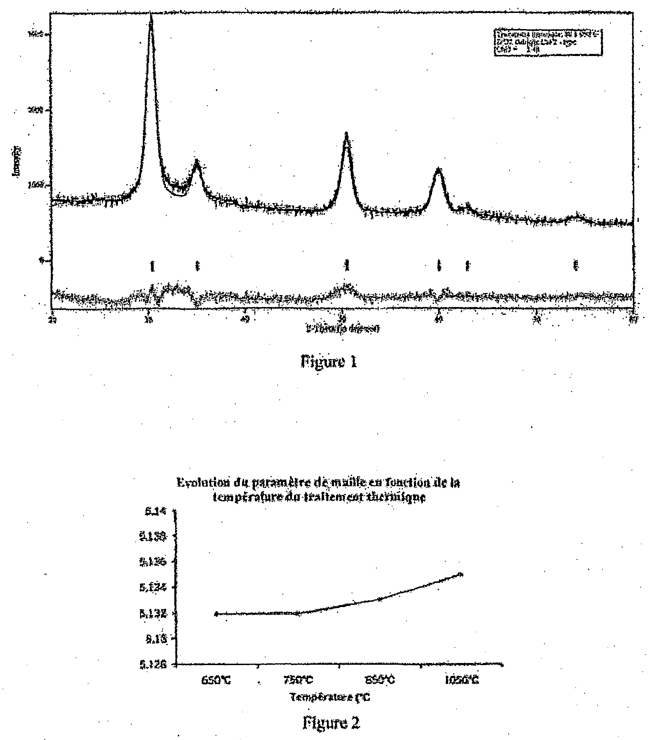

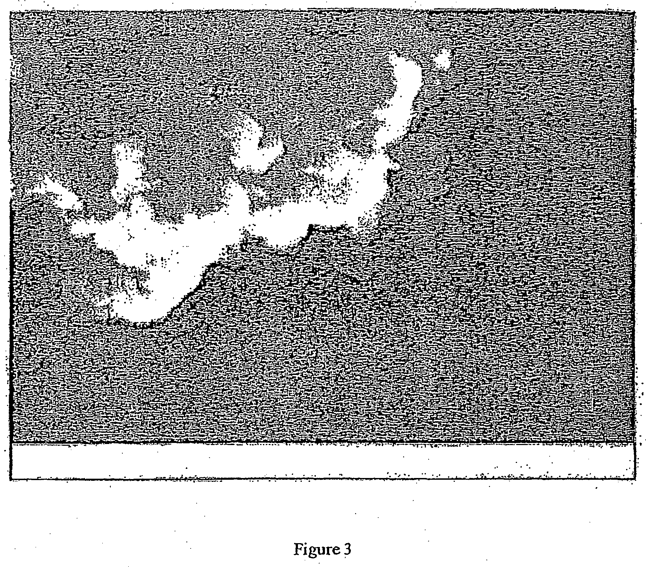

Après un traitement thermique sous air à 650°C, on obtient une poudre de zircone cubique stabilisée (diagramme, figure 1) de surface spécifique de l'ordre de 70 à 88 m².g⁻¹. Si l'on considère que les grains sont sphériques, il est possible de déduire de ces valeurs un diamètre moyen des particules. Ces derniers sont de l'ordre d'une dizaine de nanomètres et peuvent atteindre quelques dizaines de nanomètres pour des températures plus élevées (figure 3). Il est donc possible, par cette méthode de synthèse, d'obtenir à basse température une poudre de zircone dopée à l'oxyde d'yttrium de très fine granulométrie.

Différents traitements thermiques ont été réalisés sur cette poudre d'aérogel. Il apparaît que quelle que soit la température de traitement thermique, le paramètre de maille reste constant (figure 2). Il y a donc dès 650°C une parfaite insertion de l'yttrium dans la maille.

### EXEMPLE 2 (exemple comparatif): Synthèse de poudre de TiO₂ par voie méthanol supercritique

### 1. Préparation de l'aérogel

5 cm³ d'H₂O sont ajoutés à 18,7 cm³ de titane (IV) isopropoxyde (Ti[OCH(CH₃)₂]₄) préalablement dilués par agitation ultrasonique dans 50 cm³ de méthanol. L'homogénéité du mélange est assurée par agitation (ultrasonique et mécanique).

La solution ainsi obtenue est plongée dans un autoclave contenant du méthanol afin d'être séchée dans les conditions hypercritiques du solvant et sous un balayage d'azote. L'autoclave est porté à la température de 260°C et à une pression de 13 MPa (1 900 psi).

Après dépressurisation et refroidissement, on obtient 40 cm³ d'un solide jaune pâle correspondant à 4,86 g de poudre d'aérogel précurseur de TiO₂ dont la surface spécifique est de 146 m².g⁻¹.

### 2. Obtention d'une poudre de TiO₂

Le dioxyde de titane se présente dans la nature sous différentes formes allotropiques:
- l'anatase de structure quadratique (a=3,7845 Å, c=9,5143 Å)
- le rutile de structure quadratique (a=4,5933 Â, c=2,9592 Å)
- la brookite de structure orthorhombique (a = 9,221 Å, b=5,472 Å, c=2,959 Å)

Un traitement thermique sous air de la poudre d'aérogel est nécessaire afin d'obtenir une poudre de dioxyde de titane cristallisé. La synthèse de poudres de TiO₂ de structure cristalline bien définie dépend des conditions de traitements thermiques.

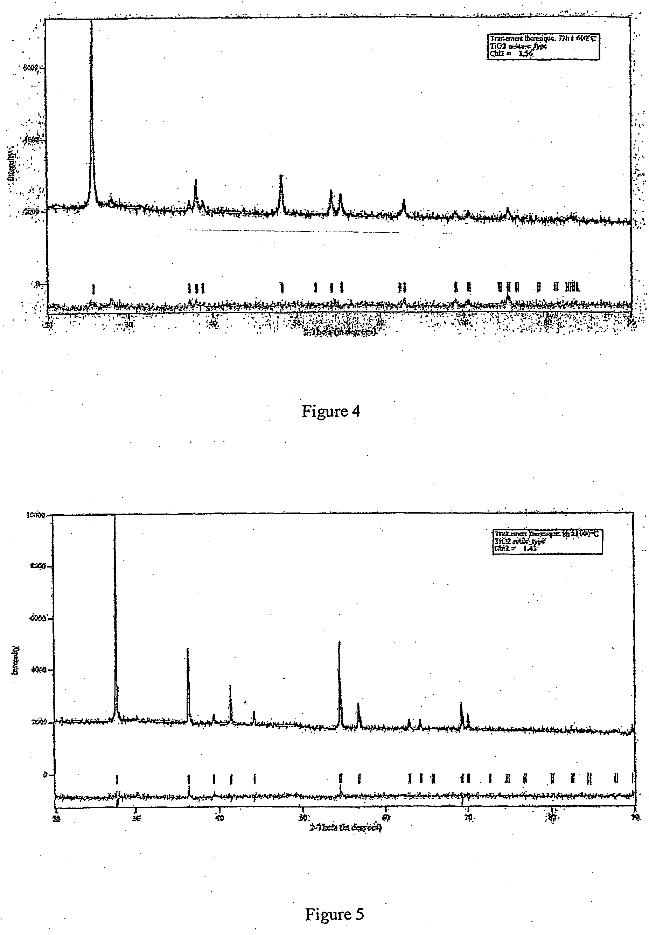

Ainsi, dès 600°C, il est possible de synthétiser un produit pur de TiO₂ de structure anatase (diagramme, figure 4). Les paramètres de maille affinés (a=3,7853 Å, c=9,5132 Â) sont en accord avec les valeurs standard données par la figure JCPDS.

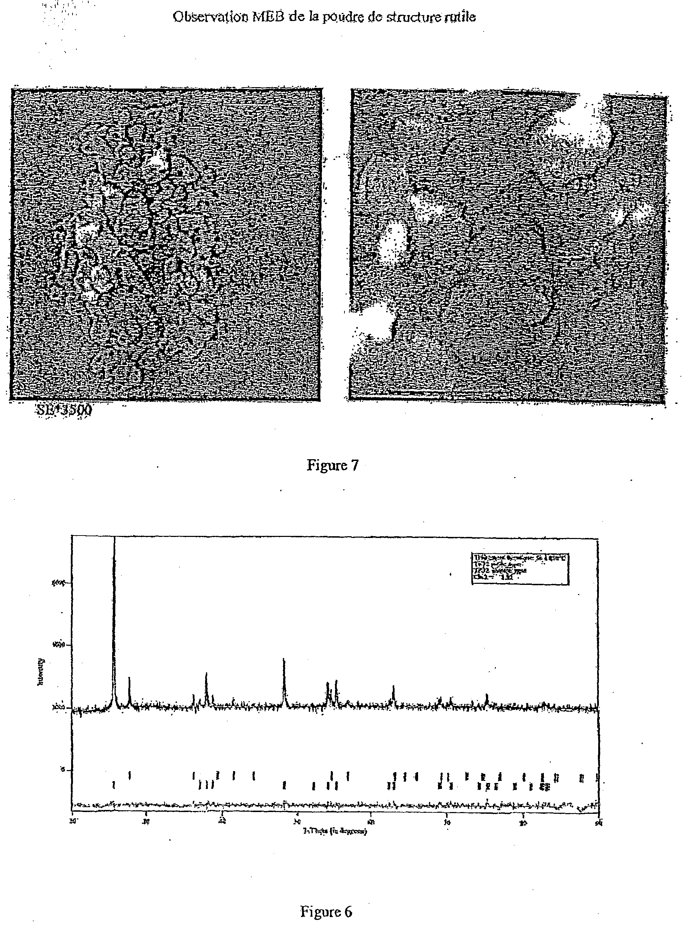

La structure rutile peut, quant à elle, être obtenue à plus haute température (> 1 000°C environ). Les paramètres de maille calculés par affinement sont: a=4,593371 Å, c=2,95579 Å (figure 5). La poudre est constituée de grains dont la taille atteint quelques centaines de nanomètres (figure 6).

Entre 600°C et 1 000°C, on obtient une poudre polystructurale où les structures anatase et rutile cohabitent (figure 7).

Des tests d'irradiation sous UV ont été réalisés afin de contrôler la photoréactivité des poudres ainsi synthétisée. Les cristaux rutiles sont en théorie moins photosensibles. Néanmoins, après 1 h d'exposition aux UV, aucune sensibilité n'a été observée et cela quelle que soit la teneur en anatase contenue dans la poudre.

## Revendications

1. Procédé de préparation d'une composition précurseur de poudre d'oxydes inorganiques choisis parmi Ti02, Zr02, A1203 et Si02 dopés par 1 à 15 % d'yttrium, ladite composition étant sous forme d'aérogel, **caractérisé en ce qu'**il ne met pas en oeuvre de catalyseur acide ou basique et **en ce qu'**il comprend les étapes suivantes:
a) addition dans un solvant organique, en présence d'eau, de différents éléments chimiques nécessaires à l'obtention dudit précurseur, lesdits éléments chimiques étant sous forme soluble,
b) mélange sous agitation à une température inférieure à la température d'ébullition du solvant, de préférence à la température ambiante, et
c) élimination du solvant par séchage en autoclave à une température supérieure à la température critique du solvant.

2. Procédé selon la revendication 1, **caractérisé en ce que** les éléments chimiques sont présents dans des quantités stoechiométriques.

3. Procédé selon l'une quelconque des revendications 1 et 2, **caractérisé en ce que** les formes solubles des éléments chimiques sont choisies dans le groupe constitué par les acétates, les alcoxydes, les oxalates, les acétylacétonates et leurs mélanges.

4. Procédé selon l'une quelconque des revendications 1 à 3, **caractérisé en ce que** le solvant est choisi dans le groupe comprenant les alcools, de préférence le méthanol, l'éthanol, le n-butanol, l'isopropanol, le sec-butanol et l'acétone.

5. Procédé selon l'une quelconque des revendications 1 à 4, **caractérisé en ce que** l'agitation est ultrasonique ou mécanique.

6. Composition précurseur de poudre d'oxydes inorganiques choisis parmi Ti02, Zr02, A1203 et Si02 dopés par 1 à 15 % d'yttrium sous forme d'aérogel **caractérisée en ce qu'**elle est obtenue directement par le procédé selon l'une quelconque des revendications 1 à 5.

7. Procédé de préparation d'un composé cristallin **caractérisé en ce qu'**on soumet une composition selon la revendication 6 à un traitement thermique à une température comprise entre 300 et 1 200°C pendant 10 min. à 10 heures sous atmosphère contrôlée.

8. Composé cristallin de poudre d'oxydes inorganiques choisis parmi Ti02, Zr02, A1203 et Si02 dopés par 1 à 15 % d'yttrium obtenu par le procédé selon la revendication 7, **caractérisé en ce qu'**il est monophasique et que le diamètre moyen de particules est compris entre 10 et 500 nanomètres, de préférence entre 15 et 100 nanomètres.

9. Utilisation des composés cristallins selon la revendication 8 dans les piles à combustibles.

10. Utilisation des composés cristallins selon la revendication 8 dans le domaine cosmétique.

11. Utilisation des composés cristallins selon la revendication 8 comme oxyde réfractaire.

12. Utilisation des composés cristallins selon la revendication 8 comme revêtements, notamment de métaux.

13. Utilisation des composés cristallins selon la revendication 8comme catalyseur ou support de catalyseurs.

## Patentansprüche

1. Verfahren zur Herstellung einer Vorläufer-Pulverzusammensetzung aus anorganischen Oxiden, ausgewählt aus Ti02, Zr02, A1203 und Si02, dotiert mit 1 bis 15 % Yttrium, wobei die Zusammensetzung die Form eines Aerogels aufweist, **dadurch gekennzeichnet, dass** es keinen sauren oder basischen Katalysator durchführt und dadurch, dass es die folgenden Schritte umfasst:
a) Zugeben, in ein organisches Lösemittel in Gegenwart von Wasser, von verschiedenen chemischen Elementen, die erforderlich sind, um den Vorläufer zu erhalten, wobei die chemischen Elemente eine lösliche Form aufweisen,
b) Mischen, unter Rühren bei einer Temperatur unter dem Siedepunkt des Lösemittels, vorzugsweise bei Raumtemperatur, und
c) Entfernen des Lösemittels durch Trocknen in einem Autoklav bei einer Temperatur über der kritischen Temperatur des Lösemittels.

2. Verfahren nach Anspruch 1, **dadurch gekennzeichnet, dass** die chemischen Elemente in stöchiometrischen Mengen vorhanden sind.

3. Verfahren nach einem der Ansprüche 1 und 2, **dadurch gekennzeichnet, dass** die löslichen Formen der chemischen Elemente ausgewählt sind aus der Gruppe, bestehend aus Acetaten, Alkoxiden, Oxalaten, Acetylacetonaten und ihren Mischungen.

4. Verfahren nach einem der Ansprüche 1 bis 3, **dadurch gekennzeichnet, dass** das Lösemittel ausgewählt ist aus der Gruppe, umfassend Alkohole, vorzugsweise Methanol, Ethanol, n-Butanol, Isopropanol, sec-Butanol und Aceton.

5. Verfahren nach einem der Ansprüche 1 bis 4, **dadurch gekennzeichnet, dass** das Rühren mit Ultraschall oder mechanisch erfolgt.

6. Vorläufer-Pulverzusammensetzung aus anorganischen Oxiden, ausgewählt aus Ti02, Zr02, A1203 und Si02, dotiert mit 1 bis 15 % Yttrium in Form eines Aerogels, **dadurch gekennzeichnet, dass** sie direkt durch das Verfahren nach einem der Ansprüche 1 bis 5 erhalten wird.

7. Verfahren zur Herstellung einer kristallinen Verbindung, **dadurch gekennzeichnet, dass** eine Zusammensetzung nach Anspruch 6 einer thermischen Behandlung bei einer Temperatur zwischen 300 und 1200 °C während 10 min. bis 10 Stunden bei einer kontrollierten Atmosphäre unterzogen wird.

8. Kristalline Pulververbindung aus anorganischen Oxiden, ausgewählt aus Ti02, Zr02, A1203 und Si02, dotiert mit 1 bis 15 % Yttrium, erhalten durch das Verfahren nach Anspruch 7, **dadurch gekennzeichnet, dass** es einphasig ist, und dass der mittlere Durchmesser der Partikel zwischen 10 und 500 Nanometer, vorzugsweise zwischen 15 und 100 Nanometer liegt.

9. Verwendung der kristallinen Verbindungen nach Anspruch 8 in Brennstoffzellen.

10. Verwendung der kristallinen Verbindungen nach Anspruch 8 auf dem Gebiet der Kosmetik.

11. Verwendung der kristallinen Verbindungen nach Anspruch 8 als feuerfestes Oxid.

12. Verwendung der kristallinen Verbindungen nach Anspruch 8 als Beschichtungen, insbesondere von Metallen

13. Verwendung der kristallinen Verbindungen nach Anspruch 8 als Katalysator oder Träger von Katalysatoren.

## Claims

1. Process for the preparation of a precursor composition of powder of inorganic oxides chosen from among Ti02, Zr02, A1203 and Si02 doped with 1 to 15% yttrium, said composition being in aerogel form, **characterised in that** it does not use an acid or basic catalyst and **in that** it comprises the following steps:
a) addition in an organic solvent, in the presence of water, of different chemical elements required to obtain said precursor, said chemical elements being in soluble form,
b) mixing under stirring at a temperature less than the boiling point of the solvent, preferably at ambient temperature, and
c) removal of the solvent by drying in an autoclave at a temperature greater than the critical temperature of the solvent.

2. Process according to claim 1, **characterised in that** the chemical elements are present in stoichiometric quantities.

3. Process according to any one of claims 1 and 2, **characterised in that** the soluble forms of the chemical elements are chosen in the group consisting of acetates, alkoxides, oxalates, acetylacetonates and mixtures thereof.

4. Process according to any one of claims 1 to 3, **characterised in that** the solvent is chosen in the group comprising alcohols, preferably methanol, ethanol, n-butanol, isopropanol, sec-butanol and acetone.

5. Process according to any one of claims 1 to 4, **characterised in that** the stirring is ultrasonic or mechanical.

6. Precursor composition of powder of inorganic oxides chosen from among Ti02, Zr02, A1203 and Si02 doped with 1 to 15% yttrium in aerogel form **characterised in that** it is obtained directly with the process according to any one of claims 1 to 5.

7. Process for the preparation of a crystalline compound **characterised in that** a composition according to claim 6 is subjected to a heat treatment at a temperature between 300 and 1200°C for 10 min. to 10 hours in a controlled atmosphere.

8. Crystalline compound of powder of inorganic oxides chosen from among Ti02, Zr02, A1203 and Si02 doped with 1 to 15% yttrium obtained with the process according to claim 7, **characterised in that** it is single-phase and that the mean particle diameter is between 10 and 500 nanometres, preferably between 15 and 100 nanometres.

9. Use of the crystalline compounds according to claim 8 in fuel cells.

10. Use of the crystalline compounds according to claim 8 in the field of cosmetics.

11. Use of the crystalline compounds according to claim 8 as a refractory oxide.

12. Use of the crystalline compounds according to claim 8 as coatings, notably of metals.

13. Use of the crystalline compounds according to claim 8 as a catalyst or catalyst substrate.
